# EUROPÄISCHE PATENTSCHRIFT

(11) **EP 3 152 437 B1**
(45) Veröffentlichungstag und Bekanntmachung des Hinweises auf die Patenterteilung: **09.06.2021**
(21) Anmeldenummer: 15720327.4
(22) Anmeldetag: 29.04.2015
(51) Int. Cl.: F03D 7/06, F03D 3/00, F03D 3/02, F03D 3/06

(54) **VERTIKALE WINDKRAFTANLAGE SOWIE VERFAHREN ZUM BETRIEB EINER SOLCHEN ANLAGE**
VERTICAL AXIS WIND TURBINE AND METHOD FOR OPERATING OF SUCH A TURBINE
ÉOLIENNE ET PROCÉDÉ POUR FAIRE FONCTIONNER UN TEL ÉQUIPEMENT

(30) Priorität: 06.06.2014 CH 868142014
(43) Veröffentlichungstag der Anmeldung: 12.04.2017
(73) Patentinhaber: Agile Wind Power AG, 8600 Dübendorf (CH)
(72) Erfinder: BAHNMÜLLER, Karl, CH-8953 Dietikon (CH); HUG, Hans Thomas, CH-8484 Weisslingen (CH)
(74) Vertreter: IPrime Rentsch Kaelin AG
(86) Internationale Anmeldenummer: PCT/EP2015/059392
(87) Internationale Veröffentlichungsnummer: WO 2015/185299

(56) Entgegenhaltungen:
- WO-A1-94/25750
- WO-A1-2007/143918
- WO-A1-2014/056875
- CN-U- 201 943 888
- GB-A- 2 000 556
- US-A- 4 410 806
- US-A- 4 530 642

## Beschreibung

### TECHNISCHES GEBIET

Die vorliegende Erfindung bezieht sich auf das Gebiet der Windkraftanlagen. Sie betrifft eine vertikale Windkraftanlage gemäss Anspruch 1 . Sie betrifft weiterhin ein Verfahren zum Betrieb einer solchen Anlage.

### STAND DER TECHNIK

Neben den üblichen, meist mit drei Flügeln ausgestatteten horizontalen Windkraftanlagen, die kommerziell in grosser Zahl hergestellt und eingesetzt werden und Leistungen im MW-Bereich abgeben, werden auch immer wieder vertikale Windkraftanlagen vorgeschlagen, die nach unterschiedlichen Prinzipien arbeiten können. In WO 94/25750 A1 ist zum Beispiel eine vertikale Windkraftanlage offenbart.

Die Druckschrift US 3,902,072 A offenbart einen Windkraftgenerator mit einer horizontalen rotierenden Plattform, auf der am Aussenumfang eine Vielzahl von vertikalen Flügeln angeordnet ist, die alle koaxial um eine zentrale Achse und jeweils um eine eigene Achse rotieren. Die Drehung der vertikalen Flügel richtet sich nach Änderungen in der Windrichtung und Windgeschwindigkeit und die Drehung jedes einzelnen Flügels ist so gesteuert, dass auf ¾ des Umlaufsweges der Plattform aus dem Wind Leistung entnommen wird, während auf dem Rest des Weges die Flügel so gestellt sind, dass sie dem Wind minimalen Widerstand bieten. Die Steuerung der Flügel erfolgt über eine zentrale Getriebe- Mechanik mit einem gemeinsamen Servomotor.

Die Druckschrift US 4,410,806 A beschreibt eine vertikale Windkraftanlage mit einer rotierenden Struktur, die eine Serie von drehbeweglichen vertikalen Flügeln umfasst, deren Stellungen so gesteuert werden, dass sich ein konstante Drehzahl für die rotierende Struktur ergibt, sofern eine ausreichende Windgeschwindigkeit vorliegt. Eine Mikroprozessor-Steuerung verarbeitet die Informationen über Windgeschwindigkeit, Windrichtung und Drehzahl der rotierenden Struktur und erzeugt ein elektrisches Signal zum Einstellen der Flügelposition. Die Steuerung der Anlage umfasst elektrische Flügel-Aktuatoren, mit deren Hilfe die Flügel der rotierenden Struktur moduliert werden. Die Flügelmodulation steuert den Anstellwinkel, der seinerseits die Drehzahl des Rotors bestimmt. Ein Windgeschwindigkeitsmesser gibt Daten für Start und Stopp der Anlage aus, während ein Windrichtungsmesser eingesetzt wird, um das Umschlagen der Flügel bei 90° und 270° relativ zur Windrichtung zu halten. Die Steuerung ist so ausgelegt, dass bei Windgeschwindigkeiten zwischen 19 und 40 Meilen/ h eine konstante Drehzahl aufrechterhalten wird.

Die Druckschrift US 4,494,007 A offenbart eine vertikale Windkraftanlage, bei der die Orientierung der um eine gemeinsame zentrale Achse rotierenden Flügel von einer Windfahne über eine gemeinsame Mechanik während ihres Umlaufs um die zentrale Achse so gesteuert wird, dass, wenn sich die Windgeschwindigkeit ändert, die Drehstellung der Flügel in einer kompensierenden Richtung verändert wird.

Die Druckschrift US 4,609,827 A beschreibt eine vertikale Windkraftanlage mit Blättern mit Flügelprofil. Ein positives und synchrones Flügel-Orientierungssystem wird durch einen ausserhalb des Rotors angeordneten Mechanismus gesteuert. Zwei neuartige Einrichtungen verbessern die aerodynamische Effizienz und erhöhen die Rotationskräfte.

Die in der Druckschrift US 6,379,115 B1 offenbarte Windkraftanlage umfasst eine drei rotierende Drehachse sowie eine Mehrzahl von an der Achse angebrachten, drehenden Stützarmen, zwischen denen Flügel zur Aufnahme der Windkraft drehbar gelagert sind. Ein Windmesser misst Windrichtung und -geschwindigkeit. Servomotoren an den Flügeln steuern die Stellung der Flügel nach Massgabe der gemessenen Winddaten. Verschieden Methoden der Steuerung werden dazu angegeben.

Die Druckschrift US 2008175709 A1 beschreibt eine Turbine mit hohem Wirkungsgrad zur Energieerzeugung aus einer Wind- oder Wasserströmung. Die Turbine hat eine zentrale Achse mit einer Mehrzahl von Flügeln, die um die Achse herum nach Art eines Schaufelrades drehbar sind. Jeder Flügel hat eine Flügelachse parallel zur Flügellängsrichtung und zur zentralen Achse und ist um die Flügelachse drehbar. Während des Betriebs der Turbine nimmt jeder Flügel einen Anstellwinkel zur Strömungsrichtung an, der dynamisch gesteuert wird, wenn sich der Flügel um die zentrale Achse dreht, um das Drehmoment des Flügels um die Achse zu maximieren.

Die Druckschrift WO 2009086648 A2 schliesslich zeigt eine Windkraftanlage mit wenigstens einem um eine vertikale Achse drehbaren Rotor, welcher zwischen zwei horizontalen, mit Abstand übereinander liegenden Lagerebenen eine Mehrzahl von auf einem Umfangskreis verteilt angeordneten, jeweils um eine vertikale Schwenkachse schwenkbaren Rotorblättern umfasst, deren Schwenkbereich beidseitig durch einen Anschlag begrenzt ist, wobei die Breite der Rotorblätter kleiner als ungefähr 1/3 des Radius des Umfangskreises ist. Insbesondere können dabei Rotorblätter in mehreren Ebenen übereinander angeordnet sein.

Die bekannten vertikalen Windkraftanlagen sind für bodennahe Winde ausgelegt und weisen daher eine vergleichsweise geringe Gesamthöhe auf. Wird eine solche Anlage jedoch für Höhen ausgelegt, die den Höhen der heutigen horizontalen Windkraftanlagen vergleichbar sind, muss eine Höhenabhängigkeit der Windgeschwindigkeit und ggf. sogar Windrichtung in die Überlegungen zu einer möglichst effizienten Energieerzeugung mit einbezogen werden.

### DARSTELLUNG DER ERFINDUNG

Es ist daher eine Aufgabe der Erfindung, eine vertikale Windkraftanlage zu schaffen, die auch auf grössere Gesamthöhen hin skalierbar ist und zugleich einen hohen Wirkungsgrad bei gleichzeitig einfachem und funktionssicherem Aufbau ermöglicht.

Es ist weiterhin eine Aufgabe der Erfindung, ein Verfahren zum Betrieb einer solchen Anlage anzugeben.

Diese und andere Aufgaben werden durch die Merkmale der Ansprüche 1 und 11 gelöst.

Die erfindungsgemässe vertikale Windkraftanlage umfasst zwei oder mehr längs einer vertikalen Maschinenachse übereinander angeordnete Zellen, wobei jede der Zellen eine Mehrzahl von vertikalen Flügeln umfasst, die innerhalb der Zelle auf einem konzentrischen Kreis um die Maschinenachse herum verteilt angeordnet und gemeinsam auf diesem Kreis bewegbar und drehfest mit einer Hauptwelle verbunden sind, wobei die Flügel in der Zelle jeweils einzeln um eine, insbesondere durch ihr Inneres verlaufende, vertikale Drehachse drehbar gelagert sind wobei jedem der Flügel Mittel zugeordnet sind, mit welchen der Flügel während des Umlaufens um die Maschinenachse unabhängig von den anderen Flügeln in eine vorbestimmte und jederzeit änderbare Drehstellung um seine Drehachse gebracht werden kann, wobei die Flügel unten und oben jeweils drehbar am Ende eines radialen Arms gelagert sind, und wobei die Arme jeweils einen fiktiven Ring oben und unten an jeder Zelle bilden. Sie zeichnet sich dadurch aus, dass eine Windmesseinrichtung am Ende je eines Arms pro Ring befestigt ist.

Eine Ausgestaltung der vertikalen Windkraftanlage nach der Erfindung ist dadurch gekennzeichnet, dass jede Zelle einen konzentrisch zur Maschinenachse angeordneten ersten und zweiten Ring umfasst, welche Ringe die Zelle oben und unten begrenzen, und zwischen denen die Flügel der Zelle um 360° drehbar angeordnet sind.

Insbesondere sind die Flügel einer Zelle an ihren Enden auf dem ersten und zweiten Ring um 360° drehbar gelagert.

Insbesondere haben benachbarte Zellen jeweils einen Ring gemeinsam.

Insbesondere sind aber auch die Mittel zum Verändern der Drehstellung der Flügel auf den Ringen angeordnet.

Speziell umfassen die Mittel zum Verändern der Drehstellung der Flügel einen elektrisch oder hydraulisch angetriebenen Motor.

Die Drehbewegung des elektrisch oder hydraulisch angetriebenen Motors kann dabei beim elektrisch angetriebenen Motor über Zahnräder oder beim hydraulisch angetriebenen Motor direkt auf den zugehörigen Flügel übertragen werden.

Speziell ist der elektrisch oder hydraulisch angetriebene Motor mit der Motorachse in der Ringebene liegend angeordnet, und die Drehbewegung zwischen den Zahnrädern wird beim elektrischen Antrieb mittels eines Zahnriemens übertragen. Bei der Hydraulikvariante ist der Hydraulikmotor direkt, d.h. ohne Getriebe, mit der Flügeldrehachse verbunden.

Es ist aber auch denkbar, dass der elektrisch oder hydraulisch angetriebene Motor mit der Motorachse senkrecht zur Ringebene angeordnet ist, und dass zur Übertragung der Drehbewegung beim elektrischen Antrieb ein Winkelgetriebe zwischengeschaltet ist.

Eine andere Ausgestaltung der vertikalen Windkraftanlage nach der Erfindung ist dadurch gekennzeichnet, dass die unterste der Zellen einen vorbestimmten Abstand zum Boden aufweist, und dass die Hauptwelle zwischen der untersten Zelle und einem in Bodennähe angeordneten Maschinenhaus und an ihren Enden drehbar gelagert ist.

Speziell ist die Hauptwelle aus mehreren in axialer Richtung hintereinander angeordneten Abschnitten zusammengesetzt, und die Abschnitte sind untereinander über Flansche verbunden.

Insbesondere umfasst die Hauptwelle einen unteren zylindrischen Abschnitt, einen mittleren, sich nach oben konisch erweiternden Abschnitt und einen oberen zylindrischen Abschnitt, der einen grösseren Aussendurchmesser aufweist als der untere zylindrische Abschnitt.

Auf dem unteren zylindrischen Abschnitt ist vorzugsweise der Rotor eines elektrische Energie erzeugenden Generators drehfest angebracht.

Speziell ist zur drehbaren Lagerung der Hauptwelle am unteren Ende der Hauptwelle ein Lagerzapfen und am oberen Ende eine Stützrollenlaufbahn vorgesehen. Der Lagerzapfen ist mit einem Drucklager ausgestattet, das die unteren vertikalen Gravitationskräfte des Rotors übernimmt, und mit einem Radiallager, das die horizontalen unteren Reaktionswindkräfte der Hauptwelle aufnimmt.

Schliesslich kann das obere Lager der Hauptwelle, das als Stützrollenlager ausgebildet ist und die vertikalen oberen Reaktionswindkräfte der Hauptwelle aufnimmt, durch ein sich schräg nach unten erweiterndes Stützgestell auf ausserhalb der Maschinenachse angeordneten Fundamenten abgestützt sein, wobei die unteren Axial- und Radiallager der Hauptwelle im Generatorgehäuse untergebracht sind, welches innerhalb des im Stützgestell hängend angeordneten Maschinenhauses an den oberen Streben befestigt ist.

Gemäss einer weiteren Ausgestaltung der Erfindung ist an jeder der Zellen oben und unten jeweils eine Windmesseinrichtung zur Messung von Windrichtung und Windgeschwindigkeit angeordnet ist, welche vorzugsweise ein Ultraschall-Anemometer umfasst. Hiermit ist es möglich, die lokale Windeinwirkung auf jeden Flügel mit guter Genauigkeit zu bestimmen.

Weiterhin kann an jeder der Zellen oben und/oder unten beim Flügellager eine Kraftmesseinrichtung für radiale und tangentiale Kraftrichtung vorgesehen sein, um die auftretenden Kräfte an den Flügeln zu bestimmen und mit zu berücksichtigen.

Beim erfindungsgemässen Verfahren zum Betrieb einer Windkraftanlage wird die Drehstellung der einzelnen Flügel der Windkraftanlage um ihre Drehachse unabhängig voneinander nach Massgabe von Messwerten der Windgeschwindigkeit, der Windrichtung, der Drehzahl der Windkraftanlage und der Position der Flügel auf ihrem Umlauf um die Maschinenachse aktiv gesteuert, wobei die Flügel unten und oben jeweils drehbar am Ende eines radialen Arms gelagert werden, und wobei die Arme jeweils einen fiktiven Ring oben und unten an jeder Zelle bilden. Das erfindungsgemässe Verfahren zum Betrieb einer vertikalen Windkraftanlage nach der Erfindung ist dadurch gekennzeichnet, dass am Ende je eines Armes pro Ring eine relative Windanströmung in Richtung und Geschwindigkeit bezogen auf den Arm und somit auf den Flügel bestimmt wird.

Eine Ausgestaltung des erfindungsgemässen Verfahrens ist dadurch gekennzeichnet, dass für den Flügelwinkel, der die Auslenkung eines Flügels aus einer Grundposition tangential zum Umlaufkreis um die Maschinenachse beschreibt, virtuelle Kurvenscheiben bereitgestellt werden, welche jeweils den Verlauf des Flügelwinkefs über der Position des Flügels auf dem Umlaufkreis festlegen, und dass die aktive Steuerung der einzelnen Flügel nach Massgabe der virtuellen Kurvenscheiben erfolgt.

Insbesondere wird zur Auswahl der für die aktive Steuerung der Flügel verwendeten virtuellen Kurvenscheiben fortlaufend die Schnelllaufzahl λ der Windkraftanlage bestimmt, wobei die Schnelllaufzahl λ das Verhältnis der Umfangsgeschwindigkeit der Flügel zur Windgeschwindigkeit angibt, und es wird nach Massgabe der bestimmten Schnelllaufzahl λ die für die aktive Steuerung der Flügel verwendete virtuelle Kurvenscheibe ausgewählt bzw. zwischen verschiedenen virtuellen Kurvenscheiben gewechselt.

Speziell sind die virtuellen Kurvenscheiben auf eine Nullposition der Windkraftanlage bezogen, und die Nullposition ist von der Windrichtung abhängig.

Insbesondere wird für jede der Zellen eine eigene, von der Höhe über dem Boden abhängige Windgeschwindigkeit bestimmt, und die Drehstellung der einzelnen Flügel der Zelle um ihre Drehachse wird nach Massgabe der für die Zelle ermittelten Windgeschwindigkeit aktiv gesteuert.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer vereinfachten Seitenansicht ein Ausführungsbeispiel der vertikalen Windkraftanlage nach der Erfindung mit zwei Zellen und der unteren Lagerung der Hauptwelle in einem hängend angebrachten Maschinenhaus;
- Fig. 2-4: in der Draufsicht (a) und in der Seitenansicht (b) die drei Ringe für die Lagerung der Flügel in der Anlage nach Fig. 1 ;
- Fig. 5: in einer Seitenansicht die Hauptwelle der Anlagen nach Fig. 1 ;
- Fig. 6: eine Seitenansicht eines Flügels mit oberem und unterem Lager der Anlagen gemäss Fig. 1 ;
- Fig.7: in einer ausschnittweisen perspektivischen Darstellung zwei verschiedene Arten der Montage eines Elektromotors zur Flügelverstellung an dem die Flügel tragenden unteren Ring;
- Fig. 8: eine andere Ansicht eines horizontal unteren Ring montierten Elektromotors zur Flügelverstellung, der durch eine Abdeckung geschützt ist;
- Fig. 9: die berechnete optimale Flügelstellung über eine 360°-Drehung der Anlage bei einer Schnelllaufzahl von 0,4 im Diagramm (a) und in der axialen Draufsicht (b);
- Fig. 10: entschärfte Flügelsteuerungskurven, die den technischen Grenzen der Antriebsmittel Rechnung tragen;
- Fig. 11: ein Blockschema der elektromechanischen Steuerung der Flügelstellung gemäss einen Ausführungsbeispiel der Erfindung; und
- Fig. 12: ein Blockschema der elektrohydraulischen Steuerung der Flügelstellung gemäss einen anderen Ausführungsbeispiel der Erfindung.

### WEGEZUR AUSFÜHRUNG DER ERFINDUNG

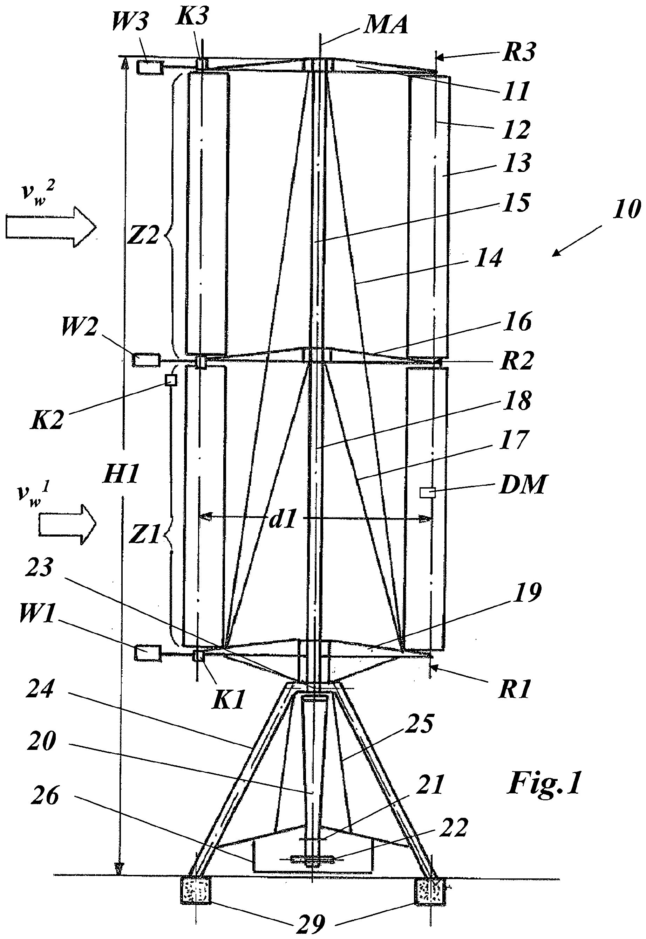

In Fig. 1 ist in einer vereinfachten Seitenansicht ein Ausführungsbeispiel der vertikalen Windkraftanlage nach der Erfindung wiedergegeben.

Die Windkraftanlage 10 der Fig. 1 umfasst zwei Zellen Z1 und Z2, die entlang einer vertikalen Maschinenachse MA übereinander angeordnet sind. Jede der Zellen Z1, Z2 hat zwei horizontale, konzentrisch zur Maschinenachse MA positionierte Ringe 11 , 16 bzw. 16, 19, zwischen denen eine Mehrzahl (im Beispiel 3) von vertikalen Flügeln 13 jeweils um eine eigene Drehachse 12 drehbar gelagert sind. Der mittlere Ring 16 ist dabei beiden Zellen Z1 und Z2 gleichermassen zugeordnet.

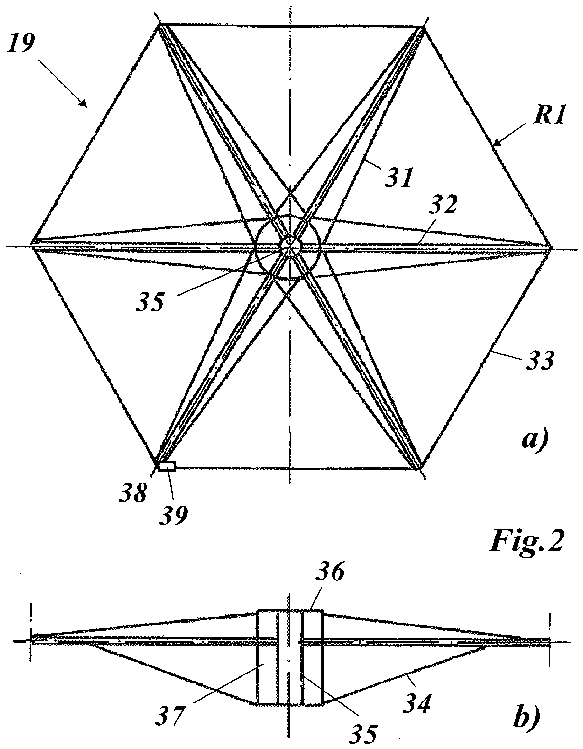

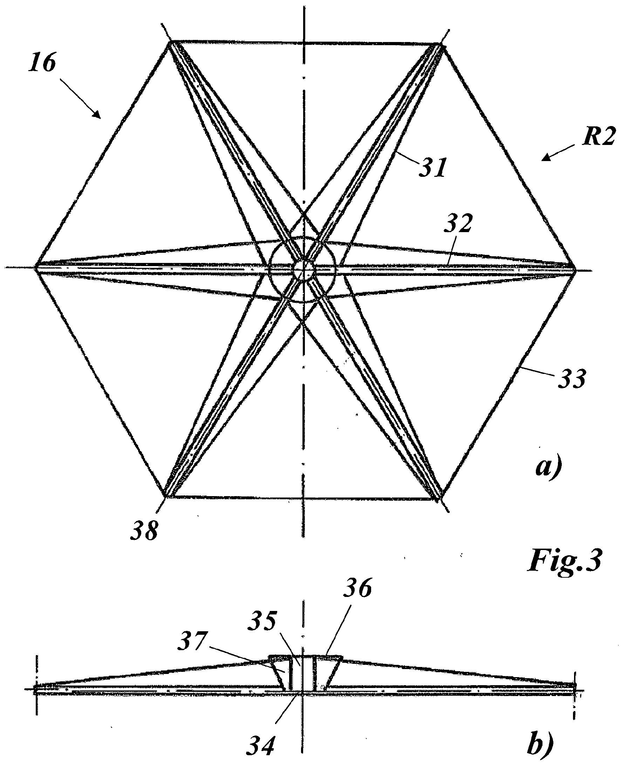

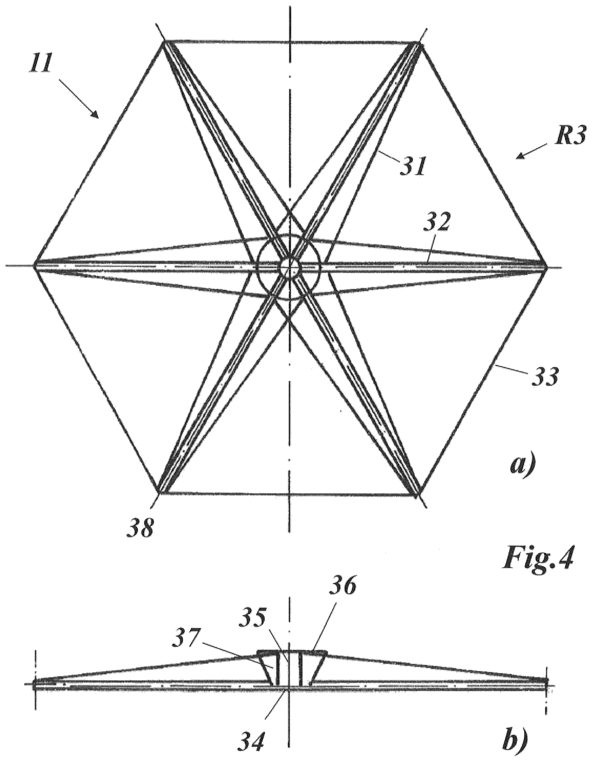

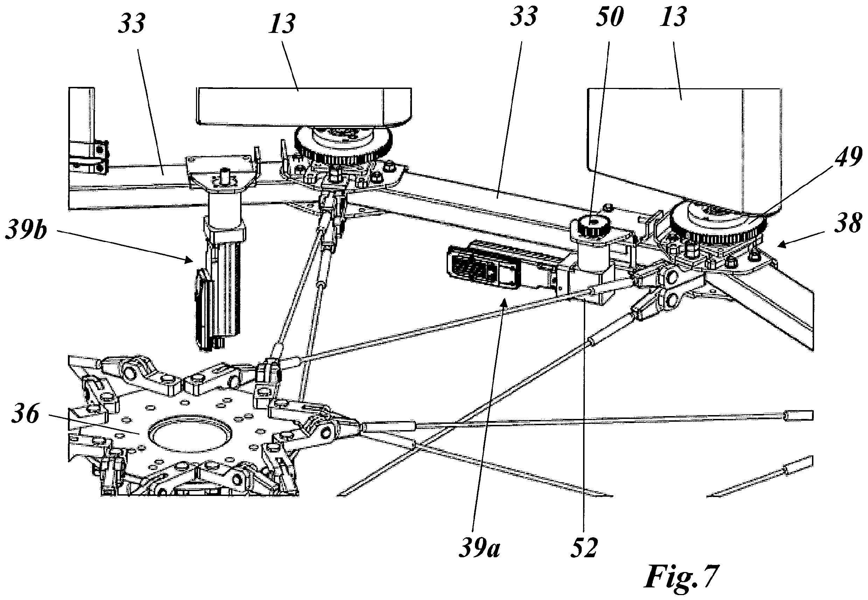

Der Aufbau der Ringe 11 , 16 und 19 ergibt sich aus den Fig. 2, 3 und 4. Jeder der Ringe 11, 16 und 19 ist als gleichseitiges Dreieck oder regelmässiges Vieleck ausgebildet, in dessen Ecken die Flügel 13 mittels eines entsprechenden Lagersupports 38 gelagert sind (siehe auch Fig. 7). Der Umfang wird aus Stangen 33 gebildet, die mit einem im Zentrum befindlichen vertikalen Rohr 35 durch radial verlaufende Stangen 31 und Rohre 32 verbunden sind. Auf der Unterseite der Ringe dienen Flacheisen 34 der Zugabstrebung. Um das zentrale Rohr 35 herum sind radiale Rippen 37 angeordnet, die zugleich an den Enden des Rohres 35 ausgebildete Flansche 36 stützen.

Die Zellen Z1 , Z2 mit ihren Flügeln 13 sind über zentrale Rohre 15 und 18 mit einer unterhalb der Zellen drehbar gelagerten vertikalen Hauptachse 20 drehfest verbunden, so dass sie zusammen mit der Hauptachse 20 um die Maschinenachse MA rotieren können. Die Hauptachse 20 ist am oberen Ende in einem Lagerhalter 23 mit Stützrollen drehbar gelagert, der über ein Gestell von schräg nach unten gespreizten Rohren 24 auf aussen liegenden Fundamenten 29 abgestützt ist. Im Ausführungsbeispiel der Fig. 1 sind die unteren Vertikal- und Radiallager im Generatorgehäuse untergebracht, welches im Maschinenhaus 26 befestigt ist, das am Gestell 24 hängend angeordnet ist. Auf diese Weise kann mehr Gewicht in die aussen liegenden Fundamente 29 eingeleitet werden, wodurch sich das Standmoment der Gesamtkonstruktion erhöht. Die Höhe H1 kann beispielsweise 75m oder auch mehr (z.B. über 200m) betragen. Der Durchmesser d1 des Kreises, auf dem sich die Flügel 13 mit ihren Drehachsen 12 bewegen, beträgt beispielsweise 20m. Jede der Zellen Z1 , Z2 sieht aufgrund der unterschiedlichen Höhe eine eigene Windgeschwindigkeit v_{w}¹ und v_{w}².

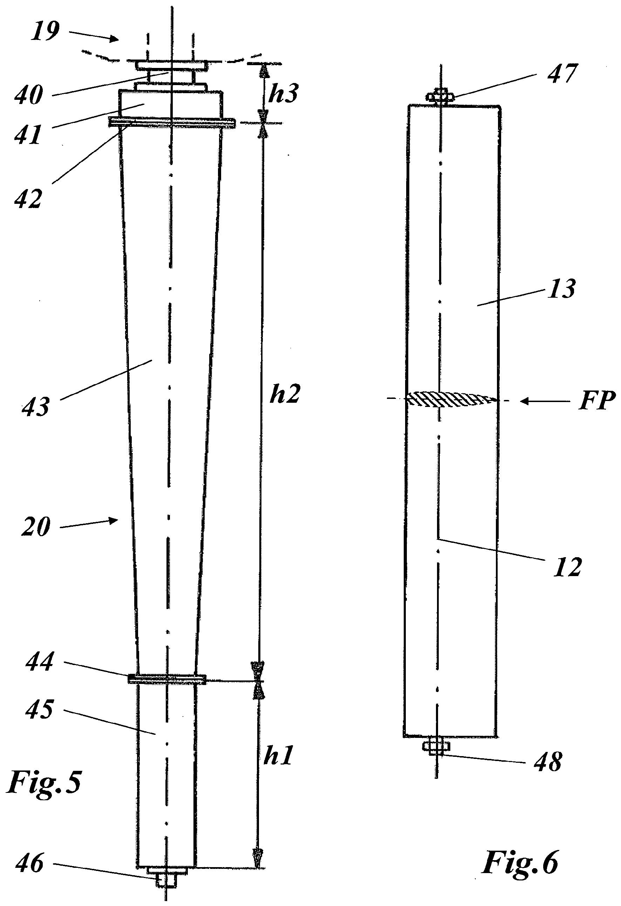

Die Hauptachse 20 besteht im Beispiel gemäss Fig. 5 aus einem unteren zylindrischen Abschnitt 45 kleineren Durchmessers, einem mittleren, sich nach oben zu konisch erweiternden Abschnitt 43 und einem oberen zylindrischen Abschnitt 41 grösseren Durchmessers. Die Abschnitte 41 , 43 und 45 sind durch Flansche 42 und 44 fest miteinander verbunden. Am oberen Ende des oberen zylindrischen Abschnitts 41 ist eine Stützrollenlaufbahn 40 angebracht, am unteren Ende des unteren zylindrischen Abschnitts 45 ein unterer Lagerzapfen 46. Die Abschnitte haben die Längen h1, h2 und h3 von z.B. 4m, 11m und 0,5m.

Wie in Fig. 1 zu erkennen ist, trägt der untere zylindrische Abschnitt 45 den Rotor 22 eines Generators sowie eine Bremse 21, die beide im Maschinenhaus 26 untergebracht sind. Zellen Z1 und Z2 zusammen mit der Hauptachse bilden den um die Maschinenachse MA drehenden Rotor der Windkraftanlage.

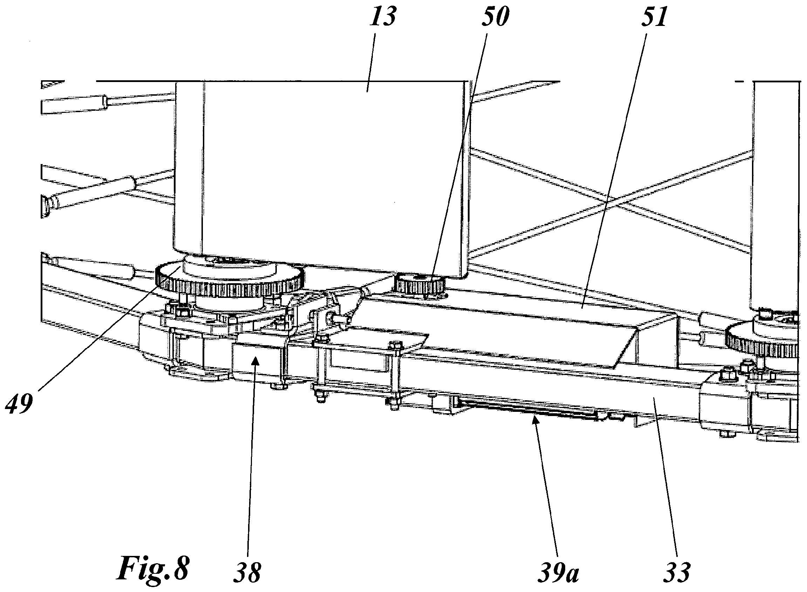

In Fig. 2(a) ist beispielhaft die Lage eines der jedem Flügel 13 zugeordneten Aktuatoren 38 eingezeichnet. Der Aktuator 39 ist in diesem Fall parallel zur Stange 33 des Ringes 19 liegend in unmittelbarer Nähe des Lagersupports 38 des entsprechenden Flügels angeordnet. Dies ist noch deutlicher im vergrösserten Ausschnitt der Fig. 7 zu erkennen, wo der eine der beiden eingezeichneten Aktuatoren, Aktuator 39a, diese parallele Lage zur Stange 33 einnimmt. Der betreffende Flügel 13 ist an seiner Drehachse oberhalb des Lagersupports 38 mit einem ersten Zahnrad 49 versehen. Der Aktuator 39a, in diesem Fall ein elektrischer Servomotor, wirkt über eine Winkelgetriebe 52 auf ein zweites Zahnrad 50, das sich auf derselben Höhe befindet wie das erste Zahnrad 49 und mit diesem über einen (nicht dargestellten) Zahnriemen antriebsmässig verbunden ist. Soll der Einsatz eines Winkelgetriebes vermieden werden, kann der Aktuator (39b) auch vertikal eingebaut werden, erzeugt dann allerdings mehr Strömungswiderstand. Der liegend angeordnete Aktuator 39a kann gemäss Fig. 8 auf einfache Weise mit einer Abdeckung 51 versehen werden, um ihn vor Witterungseinflüssen zu schützen.

Die Aktuatoren 39 bzw. 39a,b werden über entsprechende Zuleitungen von einer zentralen Versorgungseinheit mit Energie versorgt und über Steuersignale entsprechend den Vorgaben einer Steuerung angesteuert. Werden anstelle der elektrischen hydraulische Aktuatoren (Motore) eingesetzt, erfolgt die Versorgung durch entsprechende Hydraulikleitungen aus einer zentralen Hydraulikeinheit.

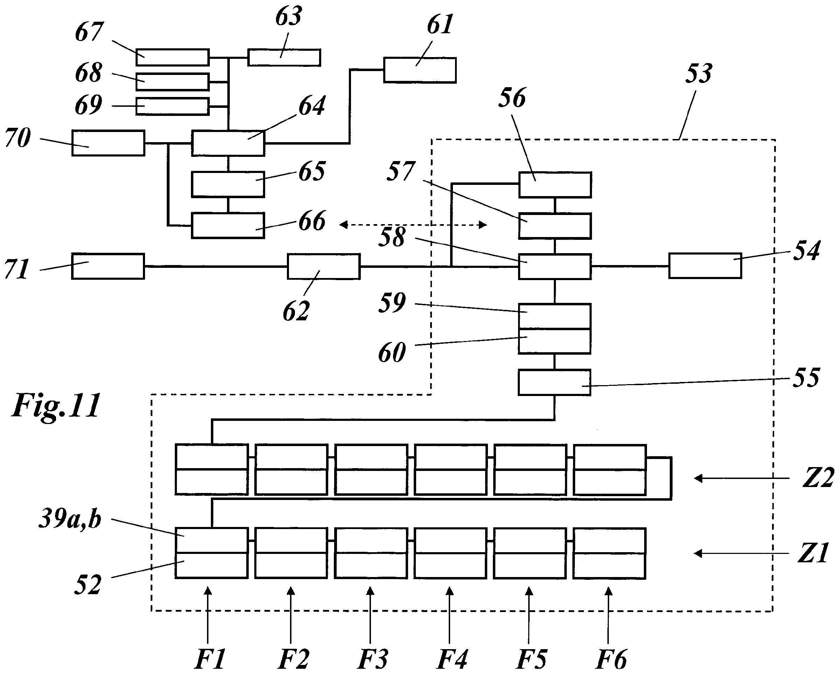

Einen Überblick über das Konzept der aktiven Flügelsteuerung gibt das Blockschaltbild auf Fig. 11 .

Die Flügel 13 bzw. F1-F6 der Zellen Z1 und Z2 werden aktiv mittels Aktuatoren 39a (über Winkelgetriebe 52) oder 39b (direkt) um ihre Längsachse gedreht. Jeder beliebige Flügelwinkel (Winkel zwischen Tangentiale am Umlaufkreis des Rotors und Sehnenlinie des Flügels) kann für jeden Flügel an jeder Position auf dem Umlaufkreis individuell eingestellt werden.

Aufgabe der aktiven Flügelsteuerung ist es, mit allen (im Beispiel 12) Flügeln 13 bzw. F1 - F6 in beiden Zellen einen mit der Rotorposition variierenden Flügelwinkel zu fahren. Je nach Windgeschwindigkeit und Drehzahl des Rotors wird ein anderer Verlauf des Flügelwinkels über der Rotorposition gefahren. Hierzu werden verschiedene virtuelle Kurvenscheiben erzeugt und in einem Speicher abgelegt. Der Flügelwinkel folgt dann dem Randverlauf der ausgewählten virtuellen Kurvenscheibe. Der Nullpunkt der Rotorposition ist dabei abhängig von der Windrichtung. Windrichtung und Windgeschwindigkeit werden von einem Windgeschwindigkeitsaufnehmer 67 und einem Windrichtungsaufnehmer 68 gemessen.

Der Windmessung kommt bei der vorliegenden Anlage gemäss Fig. 1 eine besondere Bedeutung zu. Ene vertikale Windturbine 10 der in Fig. 1 gezeigten Art hat über der ganzen Wirkhöhe des Rotors gleichförmig gestaltete Flügel 13, die während jeder Rotorumdrehung individuell optimal gesteuert werden können. Der Anstellwinkel des Flügels 13 zur relativen Windanströmung soll in jedem Zeitpunkt der Rotorumdrehung gesteuert werden können. Die Flügel "fliegen" bei Rotordrehung quasi auf einer kreisförmigen Bahn, mit dem Rotorradius, ums Zentrum des Rotors bzw. die Maschinenachse MA und erzeugen dabei einen Auftrieb in radialer Richtung und einen Vortrieb in tangentialer Richtung. Der Vortrieb soll jederzeit so optimiert werden können, dass die Turbine 10 einen maximalen Antrieb erfährt.

Aus Gründen der statischen und dynamischen Flügelbelastung ist der Rotor über der Wirkhöhe je nach Grösse der Windturbine in ein bis vier Zellen (zwei Zellen Z1 und Z2 im Beispiel der Fig. 1) aufgeteilt. Eine Zelle Z1, Z2 enthält je drei Flügel 13, die unten und oben jeweils drehbar am Ende eines radialen Arms gelagert und so fest mit dem Zentrum des Rotors verbunden sind. Die drei Arme bilden je einen fiktiven Ring oben und unten an jeder Zelle.

Da alle Rotorzellen mit dem Rotor fest verbunden sind, drehen sie auch immer gleichschnell wie der Rotor. Die Windrichtung und die Windgeschwindigkeit können sich aber über der Wirkhöhe des Rotors stark ändern, besonders bei grossen (hohen) Turbinen. Um eine optimale Vortriebssteuerung zu gewährleisten, müsste man in jedem Zeitpunkt der Rotorumdrehung die Geschwindigkeit und Richtung der relativen Windanströmung jedes Flügels genau kennen. Mit einer statischen Windmessung könnte vertikal und mit Abstand zum Rotor die Windgeschwindigkeit und die Windrichtung über der Höhe gemessen werden (Windmessmast). Da der Windmessmast fest und in einigem Abstand zur Turbine steht, würde er bei ungünstiger Windrichtung im Windschatten der Turbine stehen und auch wegen des Abstands ungenaue und nicht der Realität an den Flügeln entsprechende Messergebnisse liefern.

Es wird deshalb vorgeschlagen, je eine Windmesseinrichtung W1-W3 (Fig. 1) pro Ring aussen an je einem Ringarm zu befestigen. Die Windmesseinrichtung W1-W3 wird nun in jedem Zeitpunkt der Rotordrehung die genaue relative Windanströmung in Richtung und Geschwindigkeit bezogen auf den Arm und somit auch auf den Flügel bestimmen. Die Windmesseinrichtung sollte vorzugsweise keine mechanisch-dynamischen Messkomponenten enthalten wie Windfahne und Windrad, sondern soll Windrichtung und Windgeschwindigkeit mittels Ultraschall messen (Ultraschall-Anemometer), da mechanische Messkomponenten durch die Zentrifugalbeschleunigung am Rotor Fehlresultate zeigen könnten. Die Windmesseinrichtung W1-W3 muss einen genügenden Abstand zum Armende haben, um nicht vom Luftwirbelbereich des Armendes beeinflusst zu sein.

Es ist bekannt, dass die Windrichtung und die Windgeschwindigkeit über der Wirkhöhe eines Rotors stark variieren können (Windscherungen und Turbulenzen). Falls solche Phänomene nicht örtlich und zeitlich genau genug gemessen werden können, um die Flügel 13 optimal zu steuern, wird die Turbine einen erheblich geringeren aerodynamischen Wirkungsgrad aufweisen. Wenn die Messung nun bei jeder Zelle Z1 , Z2 oben und unten am Umfang dynamisch und zeitnah erfolgt, kann auch jeder Flügel immer auf den optimalen Relativanstellwinkel gesteuert werden. Um die Windverhältnisse in der Mittelhöhe des Flügels zu bestimmen, sind die jeweiligen Windmessungen oben und unten am Flügel zu mitteln, um daraus das Flügelsteuersignal zu bilden. Aus der Messung der Relativanströmung kann über die Rotorumfangsgeschwindigkeit jederzeit auch die absolute Windgeschwindigkeit und Windrichtung trigonometrisch berechnet werden. Anhand dieser Messungen können sehr zeitnah die optimale Schnelllaufzahl der Turbine und der optimale dazu passende Flügelanstellwinkel bestimmt werden.

Mit der Messeinrichtung können auch kurzzeitig hohe örtliche Turbulenzen festgestellt werden, die zu einer Flügel- und Turbinen-Überlastung führen könnten. Daraus kann dann auch eine allfällige entlastende Flügelverstellung oder vollständige Flügelabschaltung (Freigabe) erfolgen. Die Messungen mit den Windmesseinrichtungen W1-W3 an je einem Arm pro Ring erlauben es, die Zellen mit deren Flügeln unabhängig voneinander individuell zu steuern.

Es wird weiter vorgeschlagen, an jeder Zelle Z1 , Z2 am unteren oder oberen Ring an je einem Arm beim Flügellager eine Kraftmesseinrichtung K1-K3 für radiale und tangentiale Kraftrichtung zu installieren. Mit der Tangentialkraftmessung kann zusammen mit der Windmesseinrichtung W1-W3 der Flügelvortrieb und somit der Turbinenwirkungsgrad optimiert werden. Die Signale dieser beiden Messeinrichtungen W1-W3 und K1-K3 sollen mittels eines selbstlernenden Steuerungsprogramms ständig den Wirkungsgrad der Turbine adaptiv verbessern.

Das radiale Kraftmesssignal soll zusammen mit dem tangentialen Kraftmesssignal ständig den Belastungsverlauf des Flügels überwachen. Mit dieser Messung kann die Häufung und Intensität der Flügelbeanspruchung und damit auch die Restlebensdauer der Flügel bestimmt werden.

Als Alternative oder Ergänzung der vorbeschriebenen Kraftmessung zur Bestimmung der Flügelbeanspruchung könnte auch in der Flügelmitte auf der Oberfläche ein Dehnmessstreifen (beispielhaft für einen Flügel 13: DM in Fig. 1) angebracht werden, der zusammen mit einem Messsystem die Häufung und Intensität der Biegespannungen im Flügel 13 misst. Aus diesen Messungen könnte dann die Restlebensdauer der Flügel 13 bestimmt werden. Das Verfahren kann insofern kompliziert sein, als das Messsignal vom rotierenden Flügel an den Ringarm übertragen werden muss. Die Dehnmessstreifen-Einrichtung soll aber ausschliesslich nur zur Messung der Flügelbeanspruchung, nicht aber zur Optimierung des Flügelvortriebs verwendet werden.

Das Grundkonzept der aktiven Flügelsteuerung ist dem Blockschaltbild in Fig. 11 zu entnehmen. Die Komponenten, welche mit einer gestrichelten Linie umrahmt sind (Rotorblock 53 in Fig. 11), werden in einem Schaltschrank auf dem Rotor montiert. Die Kommunikation mit der Steuerung auf dem Turm und die Datenerfassung laufen über eine Wi-Fi-Verbindung mit entsprechenden Wi-Fi-Transmittern 57 und 66. Die Leistungsversorgung aus einer Drehstrom-Spannungsversorgung 71 (3x400VAC, 1 xNullleiter und 1 xErdung) läuft über einen Schleifring 62. Die auf dem Rotor befindlichen Funktionsblöcke werden über eine 24VDC-Spannungsversorgung 56 versorgt. Eine analoge 24VDC-Spannungsversorgung 65 ist auch ausserhalb des Rotors vorgesehen.

Die virtuellen Kurvenscheiben (verschiedene Flügelwinkelverläufe mit der Rotorposition) werden auf dem Rotor (Motioncontroller 58) abgelegt. Sie können jedoch im Betrieb über die Wi-Fi-Verbindung abgeändert werden. Windgeschwindigkeit, Windrichtung und Drehzahl des Rotors werden auf dem Turm (nicht drehend) über die I/ O einer mit einem Computer 70 zusammenarbeitenden Speicherprogrammierbaren Steuerung (SPS) 64 verarbeitet. Welche virtuelle Kurvenscheibe genommen werden muss, wird über die Wi-Fi-Verbindung an den Motioncontroller 58 auf dem Rotor übertragen. Auf dem Rotor sowie auch auf dem Turm sind I/O verfügbar.

Die 6 Aktuatoren 39a bzw. 39b folgen im einfachsten Fall der gleichen Kurvenscheibe, jedoch mit einem Winkelversatz von 120° (bei z.B. 3 Flügeln pro Zelle). Der Nullwert der Rotorposition ist abhängig von der Windrichtung. Unterscheiden sich bei höheren Anlagen und/oder mehr als zwei Zellen die Windgeschwindigkeiten für die Zellen erheblich voneinander, wird für jede der Zellen nach Massgabe der zugehörigen Windgeschwindigkeit eine eigene virtuelle Kurvenscheibe ausgewählt. Es wird also für jede der Zellen Z1 , Z2 eine eigene, von der Höhe über dem Boden abhängige Windgeschwindigkeit (v_{w}) bestimmt, und die Drehstellung der einzelnen Flügel 13, F1-F6 der Zelle nach Massgabe der für die Zelle ermittelten Windgeschwindigkeit (v_{w}) aktiv gesteuert. Da die Abhängigkeit der Windgeschwindigkeit von der Höhe über dem Boden einer Standardkurve folgt, reicht es aus, die Windgeschwindigkeit in einer Höhe zu messen, um daraus die Werte für andere Höhen zu bestimmen. Alle Zellen haben dieselbe Drehzahl um die Maschinenachse MA, aber wegen der unterschiedlichen Höhe unterschiedliche Windgeschwindigkeiten. Entsprechend ergeben sich unterschiedliche Schnelllaufzahlen, die dann über die gesamte Anlage gemittelt eine maximale Energieerzeugung gewährleisten sollen.

Der Schaltschrank mit dem Motioncontroller 58 befindet sich auf dem Rotor. Die Rotorposition sollte auch auf dem Rotor abgegriffen werden. Hierzu kann ein entsprechender Drehgeber eingesetzt werden. Im Beispiel der Fig. 11 ist stattdessen jedoch ein Geber für die Nullposition 54 vorhanden. Die Rotordrehzahl wird auf dem Turm ermittelt. Die daraus resultierenden Schrittimpulse werden über SPS 64 eingelesen und über die Wi-Fi-Verbindung an den Motioncontroller 58 auf dem Rotor übermittelt.

Die aktive Flügelsteuerung erhält mehrere Eingangssignale direkt von einem Messsystem, das den Windgeschwindigkeitsaufnehmer 67, den Windrichtungsaufnehmer 68 und ggf. einen Rotordrehmomentaufnehmer 69 umfasst. Zusätzlich werden Impulse 63 für die Drehzahl eingespiesen. Anhand dieser Eingangssignale bestimmt die Flügelsteuerung 64, wie die einzelnen Flügel gesteuert werden müssen (welche Kurvenscheibe wird verwendet, wo ist der Null- Punkt der Rotorposition). Die Steuersignale aus dem Motioncontroller 58 gehen über eine Powermodul 59 an ein Abgangsmodul 60 und von dort über eine Verteilbox 55 an die einzelnen Aktuatoren 39a bzw. 39b.

Der Flügelwinkelverlauf wird periodisch neu ausgewählt (verschiedene Kurvenscheiben). Die Windrichtung legt die Nullposition der Rotorposition fest. Von den für die Regelung benötigten Eingangssignalen wird jeweils der Median über eine bestimmte Zeit berechnet. Sowohl die Refresh-Zeit als auch das Zeitfenster für die Mittelung der Regelparameter sollten frei wählbar sein. Eine spezielle Steuerung 61 kann Befehle für die Abschaltung der Anlage bzw. die Reduktion der Drehzahl geben.

Die max. Anzahl der verschiedenen Flügelwinkelverläufe (virtuelle Kurvenscheiben), welche definiert werden können, ist durch den Motioncontroller 58 begrenzt und kann z.B. 99 betragen. Welcher Flügelwinkelverlauf verwendet wird, ist abhängig vom Betriebszustand und der Schnelllaufzahl λ der Turbine. Die Schnelllaufzahl wird in an sich bekannter Weise berechnet aus der Windgeschwindigkeit v_{w} und der Rotordrehzahl (bzw. Rotorumfangsgeschwindigkeit).

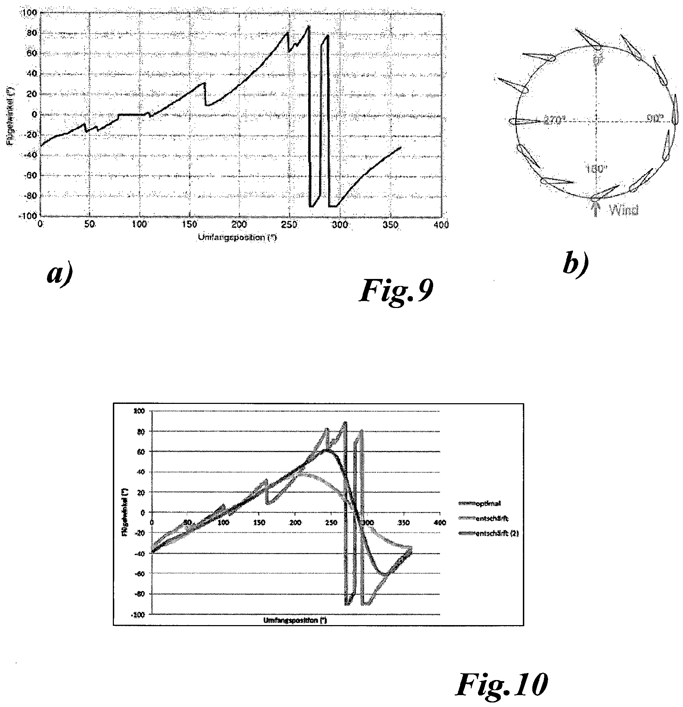

Der theoretisch optimale Flügelwinkelverlauf für einen Flügel 13 wurde mithilfe eines analytischen Modells für verschiedene Schnelllaufzahlen berechnet. Ein Beispiel für eine Schnelllaufzahl von 0,4 (a) zusammen mit einer Skizze der physikalischen Positionen der Blätter jede 30° (b) ist in Fig. 9 gezeigt.

Es ist zu beachten, dass die maximalen Beschleunigungen aus Fig. 9 in der Realität nicht erreicht werden können. Die optimalen Flügelwinkelverläufe werden deshalb entschärft und die resultierenden Charakteristiken mit typischen Eigenschaften verfügbarer Antriebsmotoren verglichen. Ein Beispiel für zwei unterschiedliche Entschärfungen zeigt Fig. 10.

Die Flügel werden einer virtuellen Leitachse entsprechend positioniert. Die Leitachse wird durch einen NULL-Impuls (Null-Position 54) und die Drehzahl bestimmt. Die SPS 64 speichert mit einer vorbestimmten Frequenz die aktuelle Windgeschwindigkeit, die Rotordrehzahl und die Windrichtung. Periodisch wird der Median von der Windgeschwindigkeit und Rotordrehzahl berechnet. Daraus wird die gemittelte Schnelllaufzahl λ über das letzte Zeitfenster berechnet und die Kurvenscheibe ausgewählt. Der Median der Windrichtung wird ebenfalls periodisch berechnet. Daraus wird die NULL-Position der Kurvenscheibe bestimmt.

Ist die Schnelllaufzahl der Turbine < 0,4 wird ein konstanter Flügelwinkelverlauf verwendet, um die Drehzahl zu erhöhen. Sobald die Schnelllaufzahl > 0,4 ist, befindet sich die Turbine im Betrieb.

Beim Herunterfahren wird die Windturbine vom Generator gebremst, um die Drehzahl auf 0 zu bringen. Die Flügelsteuerung erhält von der Steuerung 61 der Anlage ein Signal, dass der Betriebszustand Herunterfahren erreicht wurde und die Flügelantriebe 39a bzw. 39b werden stromlos gemacht oder bei hydraulischem Antrieb die Hydraulikmotoren freigeschaltet.

Die Rotordrehzahl ist 0 und die Bremsen der Windturbine sind geschlossen. Die Flügelsteuerung wird nicht ausgeschaltet, damit verliert diese auch die Rotorposition nicht. Die Motoren sind stromlos oder die Hydraulikmotore öldruckfrei. Damit richten die Flügel 13 sich mit dem Wind aus.

Die Windturbine wird mit der Bremse 21 so schnell wie möglich abgebremst. Die Flügel 13 werden bei Betätigung des Not-Aus physikalisch stromlos bzw. öldruckfrei gemacht.

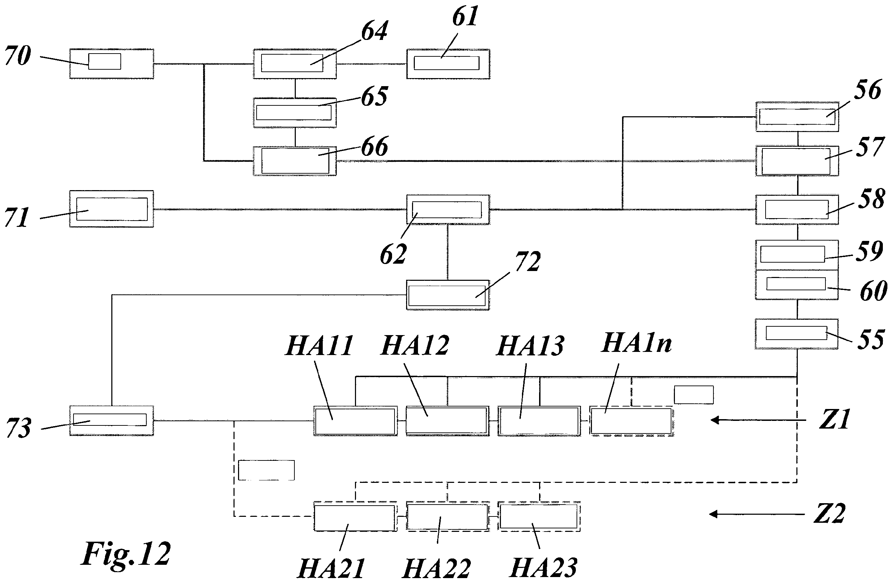

Ein zu Fig. 11 analoges Blockschaltbild für die elektrohydraulische Steuerung der Flügel in den Zellen ist in Fig. 12 wiedergegeben. Die zur Betätigung der einzelnen Flügel vorgesehenen Hydraulik-Aktuatoren HA11-HA1n und HA21-HA23, die mit den notwendigen Ventilen und einer Freischaltung ausgestattet sind, werden über in den Zellen verlegte Hydraulikleitungen von einem (oder mehreren) zentralen (im Zentrum des Rotors angeordneten) Hydraulik-Aggregat(en) 73 mit Öldruck versorgt. Das oder die Hydraulik-Aggregate 73 erhalten ihren Betriebsstrom von einer eigenen Spannungsversorgung 72, die an die Energieübertragung (Schleifring 62) angeschlossen ist.

Die Hydraulik-Aktuatoren HA11-HA1n und HA21-HA23 können besonders kompakt ausgeführt sein und hohe Stellkräfte abgeben. Darüber hinaus lässt sich sehr leicht durch Öffnen der entsprechenden Ventile der notwendige Freilauf der Flügel sicherstellen.

### Bezugszeichenliste

- 10: Windkraftanlage (vertikal)
- 11: oberer Ring
- 12: Drehachse
- 13: Flügel
- 14,17: Stange
- 15,18: Rohr
- 16: mittlerer Ring
- 19: unterer Ring
- 20: Hauptwelle
- 21: Bremse
- 22: Rotor (Generator)
- 23: Lagerhalter
- 24: Rohr
- 25: Stange
- 26: Maschinenhaus
- 29: Fundament
- 31,33: Stange
- 32: Rohr
- 34: Flach
- 35: Rohr
- 36: Flansch
- 37: Rippe
- 38: Lagersupport
- 39: Aktuator (Flügel)
- 39a,b: Servomotor
- 40: Stützrollenlaufbahn
- 41: oberer Abschnitt (zylindrisch)
- 42,44: Flansch
- 43: mittlerer Abschnitt (konisch)
- 45: unterer Abschnitt (zylindrisch)
- 46: unterer Lagerzapfen
- 47,48: Lager (z.B. Pendelrollen- oder Pendelkugellager)
- 49,50: Zahnrad
- 51: Abdeckung
- 52: Winkelgetriebe
- 53: Rotorblock
- 54: Null-Position
- 55: Verteilbox
- 56: 24VDC-Spannungsversorgung
- 57: Wi-Fi-Transmitter
- 58: Motioncontroller
- 59: Powermodul
- 60: Abgangsmodul
- 61: Steuerung
- 62: Schleifring
- 63: Impuls für Drehzahl
- 64: SPS
- 65: 24VDC-Spannungsversorgung
- 66: WiFi-Transmitter
- 67: Windgeschwindigkeitsaufnehmer
- 68: Windrichtungsaufnehmer
- 69: Rotordrehmomentaufnehmer
- 70: Computer
- 71,72: Drehstrom-Spannungsversorgung
- 73: Hydraulik-Aggregat
- d1: Durchmesser
- DM: Dehnungsmessstreifen
- FP: Flügelprofil
- F1 - F6: Flügel
- HA11 - HA1n: Hydraulik-Aktuator (integriert mit Ventilen und Freischaltung)
- HA21- HA23: Hydraulik-Aktuator (integriert mit Ventilen und Freischaltung)
- H1: Gesamthöhe
- h1-h3: Höhe
- K1-K3: Kraftmesseinrichtung
- MA: Maschinenachse
- W1-W3: Windmesseinrichtung
- Z1,Z2: Zelle

## Patentansprüche

1. Vertikale Windkraftanlage (10), umfassend zwei oder mehr längs einer vertikalen Maschinenachse (MA) übereinander angeordnete Zellen (Z1, Z2), wobei jede der Zellen (Z1, Z2) eine Mehrzahl von vertikalen Flügeln (13; F1-F6) umfasst, die innerhalb der Zelle (Z1, Z2) auf einem konzentrischen Kreis um die Maschinenachse (MA) herum verteilt angeordnet und gemeinsam auf diesem Kreis bewegbar und drehfest mit einer Hauptwelle (20) verbunden sind, und wobei die Flügel (13; F1-F6) in der Zelle (Z1, Z2) jeweils einzeln um eine, insbesondere durch ihr Inneres verlaufende, vertikale Drehachse (12) drehbar gelagert sind, wobei jedem der Flügel (13; F1-F6) Mittel (39; 39a,b; 49, 50; 52) zugeordnet sind, mit welchen der Flügel (13; F1-F6) während des Umlaufens um die Maschinenachse (MA) unabhängig von den anderen Flügeln in eine vorbestimmte und jederzeit änderbare Drehstellung um seine Drehachse (12) gebracht werden kann, wobei die Flügel (13; F1-F6) unten und oben jeweils drehbar am Ende eines radialen Arms gelagert sind, und wobei die Arme jeweils einen fiktiven Ring oben und unten an jeder Zelle (Z1, Z2) bilden, **dadurch gekennzeichnet, dass** eine Windmesseinrichtung (W1-W3) am Ende je eines Arms pro Ring befestigt ist.

2. Vertikale Windkraftanlage nach Anspruch 1, **dadurch gekennzeichnet, dass** jede Zelle (Z1, Z2) einen konzentrisch zur Maschinenachse (MA) angeordneten ersten und zweiten Ring (11, 16, 19) umfasst, welche Ringe die Zelle (Z1, Z2) oben und unten begrenzen, und zwischen denen die Flügel (13, F1-F6) der Zelle um 360° drehbar angeordnet sind.

3. Vertikale Windkraftanlage nach Anspruch 2, **dadurch gekennzeichnet, dass** die Flügel (13, F1-F6) einer Zelle (Z1, Z2) an ihren Enden auf dem ersten und zweiten Ring (11, 16, 19) um 360° drehbar gelagert sind.

4. Vertikale Windkraftanlage nach Anspruch 2, **dadurch gekennzeichnet, dass** benachbarte Zellen (Z1, Z2) jeweils einen Ring (16) gemeinsam haben.

5. Vertikale Windkraftanlage nach Anspruch 2, **dadurch gekennzeichnet, dass** die Mittel (39; 39a,b; 49, 50; 52) zum Verändern der Drehstellung der Flügel (13, F1-F6) auf den Ringen (11, 16, 19) angeordnet sind.

6. Vertikale Windkraftanlage nach Anspruch 5, **dadurch gekennzeichnet, dass** die Mittel (39; 39a,b; 49, 50; 52) zum Verändern der Drehstellung der Flügel (13, F1-F6) einen elektrisch oder hydraulisch angetriebenen Motor (39a,b) umfassen.

7. Vertikale Windkraftanlage nach Anspruch 1, **dadurch gekennzeichnet, dass** die unterste der Zellen (Z1, Z2) einen vorbestimmten Abstand zum Boden aufweist, und dass die Hauptwelle (20) zwischen der untersten Zelle (Z1) und dem in Bodennähe angeordneten Maschinenhaus und an ihren Enden drehbar gelagert ist.

8. Vertikale Windkraftanlage nach Anspruch 7, **dadurch gekennzeichnet, dass** das obere Lager (23, 40) der Hauptwelle (20), das als Stützrollenlager ausgebildet ist und die vertikalen oberen Reaktionswindkräfte der Hauptwelle aufnimmt, durch ein sich schräg nach unten erweiterndes Stützgestell (24, 25) auf ausserhalb der Maschinenachse (MA) angeordneten Fundamenten (29) abgestützt ist, wobei die unteren Axial- und Radiallager der Hauptwelle (20) im Generatorgehäuse untergebracht sind, welches innerhalb des im Stützgestell (24, 25) hängend angeordneten Maschinenhauses (26) an oberen Streben befestigt ist.

9. Vertikale Windkraftanlage nach Anspruch 1, **dadurch gekennzeichnet, dass** an jeder der Zellen (Z1, Z2) oben und unten jeweils eine Windmesseinrichtung (W1-W3) zur Messung von Windrichtung und Windgeschwindigkeit angeordnet ist, welche vorzugsweise ein Ultraschall-Anemometer umfasst.

10. Vertikale Windkraftanlage nach Anspruch 1, **dadurch gekennzeichnet, dass** an jeder der Zellen (Z1, Z2) oben und/oder unten beim Flügellager eine Kraftmesseinrichtung (K1-K3) für radiale und tangentiale Kraftrichtung vorgesehen ist.

11. Verfahren zum Betrieb einer vertikalen Windkraftanlage (10) nach Anspruch 1, wobei die Drehstellung der einzelnen Flügel (13, F1-F6) der Windkraftanlage um ihre Drehachse (12) unabhängig voneinander nach Massgabe von Messwerten der Windgeschwindigkeit (v_{w}), der Windrichtung, der Drehzahl der Windkraftanlage (10) und der Position der Flügel auf ihrem Umlauf um die Maschinenachse (MA) aktiv gesteuert wird, wobei die Flügel (13; F1-F6) unten und oben jeweils drehbar am Ende eines radialen Arms gelagert werden, und wobei die Arme jeweils einen fiktiven Ring oben und unten an jeder Zelle (Z1, Z2) bilden, **dadurch gekennzeichnet, dass** am Ende je eines Armes pro Ring eine relative Windanströmung in Richtung und Geschwindigkeit bezogen auf den Arm und somit auf den Flügel (13; F1-F6) bestimmt wird.

12. Verfahren nach Anspruch 11, **dadurch gekennzeichnet, dass** für den Flügelwinkel, der die Auslenkung eines Flügels (13, F1-F6) aus einer Grundposition tangential zum Umlaufkreis um die Maschinenachse (MA) beschreibt, virtuelle Kurvenscheiben bereitgestellt werden, welche jeweils den Verlauf des Flügelwinkels über der Position des Flügels (13, F1-F6) auf dem Umlaufkreis festlegen, und dass die aktive Steuerung der einzelnen Flügel (13, F1-F6) nach Massgabe der virtuellen Kurvenscheiben erfolgt.

13. Verfahren nach Anspruch 12, **dadurch gekennzeichnet, dass** zur Auswahl der für die aktive Steuerung der Flügel (13, F1-F6) verwendeten virtuellen Kurvenscheiben fortlaufend die Schnelllaufzahl λ der Windkraftanlage (10) bestimmt wird, wobei die Schnelllaufzahl das Verhältnis der Umfangsgeschwindigkeit der Flügel (13, F1-F6) zur Windgeschwindigkeit (v_{w}) angibt, und dass nach Massgabe der bestimmten Schnelllaufzahl λ die für die aktive Steuerung der Flügel (13, F1-F6) verwendete virtuelle Kurvenscheibe ausgewählt bzw. zwischen verschiedenen virtuellen Kurvenscheiben gewechselt wird.

14. Verfahren nach Anspruch 12, **dadurch gekennzeichnet, dass** die virtuellen Kurvenscheiben auf eine Nullposition der Windkraftanlage (10) bezogen sind, und dass die Nullposition von der Windrichtung abhängig ist.

15. Verfahren nach Anspruch 11, **dadurch gekennzeichnet, dass** für jede der Zellen (Z1, Z2) eine eigene, von der Höhe über dem Boden abhängige Windgeschwindigkeit (v_{w}) bestimmt wird, und dass die Drehstellung der einzelnen Flügel (13, F1-F6) der Zelle um ihre Drehachse (12) nach Massgabe der für die Zelle ermittelten Windgeschwindigkeit (v_{w}) aktiv gesteuert wird.

## Claims

1. Vertical wind turbine (10), comprising two or more cells (Z1, Z2) arranged one above the other along a vertical machine axis (MA), wherein each of the cells (Z1, Z2) comprises a plurality of vertical blades (13; F1-F6) which are arranged within the cell (Z1, Z2) so as to be distributed on a concentric circle around the machine axis (MA) and are jointly movable on this circle and are connected to a main shaft (20) for conjoint rotation, and wherein the blades (13; F1-F6) in the cell (Z1, Z2) are each individually rotatably mounted about a vertical rotational axis (12) which in particular extends through the interior thereof, wherein each of the blades (13; F1-F6) is associated with means (39; 39a,b; 49, 50; 52), by way of which, during rotation about the machine axis (MA), the blade (13; F1-F6) can be brought, independently of the other blades, into a predetermined rotational position, which can be changed at any time, about its rotational axis (12), wherein the top and the bottom of the blades (13; F1-F6) are each rotatably mounted on the end of a radial arm, and wherein the arms each form an imaginary ring at the top and bottom of each cell (Z1,
Z2), **characterized in that** a wind measuring apparatus (W1-W3) is fastened to the end of one arm per ring.

2. Vertical wind turbine according to claim 1, **characterized in that** each cell (Z1, Z2) comprises a first and second ring (11, 16, 19) arranged concentrically to the machine axis (MA), which rings delimit the cell (Z1, Z2) at the top and bottom, and between which the blades (13, F1-F6) of the cell are arranged so as to be rotatable by 360°.

3. Vertical wind turbine according to claim 2, **characterized in that** the ends of the blades (13, F1-F6) of a cell (Z1, Z2) are mounted on the first and second rings (11, 16, 19) so as to be rotatable by 360°.

4. Vertical wind turbine according to claim 2, **characterized in that** adjacent cells (Z1, Z2) each have a ring (16) in common.

5. Vertical wind turbine according to claim 2, **characterized in that** the means (39; 39a,b; 49, 50; 52) for changing the rotational position of the blades (13, F1-F6) are arranged on the rings (11, 16, 19).

6. Vertical wind turbine according to claim 5, **characterized in that** the means (39; 39a,b; 49, 50; 52) for changing the rotational position of the blades (13, F1-F6) comprise an electrically or hydraulically driven motor (39a, b).

7. Vertical wind turbine according to claim 1, **characterized in that** the lowermost of the cells (Z1, Z2) has a predetermined distance from the ground, and **in that** the main shaft (20) is rotatably mounted at its ends between the lowermost cell (Z1) and the machine house that is arranged near the ground.

8. Vertical wind turbine according to claim 7, **characterized in that** the upper bearing (23, 40) of the main shaft (20), which bearing is designed as a support roller bearing and absorbs the vertical upper reaction wind forces of the main shaft, is supported by a support frame (24, 25), which widens obliquely downwards, on foundations (29) arranged outside the machine axis (MA), wherein the lower axial and radial bearings of the main shaft (20) are accommodated in the generator housing, which is fastened to upper struts inside the machine house (26) suspended in the support frame (24, 25).

9. Vertical wind turbine according to claim 1, **characterized in that** a wind measuring apparatus (W1-W3) for measuring wind direction and wind speed is arranged at the top and bottom of each of the cells (Z1, Z2), which apparatus preferably comprises an ultrasonic anemometer.

10. Vertical wind turbine according to claim 1, **characterized in that** a force measuring apparatus (K1-K3) for radial and tangential force direction is provided on the blade bearing at the top and bottom of each of the cells (Z1, Z2).

11. Method for operating a vertical wind turbine (10) according to claim 1, wherein the rotational position of the individual blades (13, F1-F6) of the wind turbine about the rotational axis (12) thereof is actively controlled, independently of one another, in accordance with measured values of the wind speed (v_{w}), the wind direction, the rotational speed of the wind turbine (10), and the position of the blades on the revolution thereof about the machine axis (MA), wherein the top and bottom of the blades (13; F1-F6) are each rotatably mounted on the end of a radial arm, and the arms each form an imaginary ring at the top and bottom of each cell (Z1, Z2), **characterized in that,** on the end of one arm per ring, the direction and speed of a relative wind flow is determined in relation to the arm and thus to the blades (13; F1-F6).

12. Method according to claim 11, **characterized in that** virtual cam disks are provided for the blade angle which describes the deflection of a blade (13, F1-F6) from a basic position tangential to the circle of revolution around the machine axis (MA), which cam disks each specify the course of the blade angle via the position of the blade (13, F1-F6) on the circle of revolution, and **in that** the individual blades (13, F1-F6) are actively controlled in accordance with the virtual cam disks.

13. Method according to claim 12, **characterized in that,** in order to select the virtual cam disks used for actively controlling the blades (13, F1-F6), the tip-speed ratio λ of the wind turbine (10) is continuously determined, wherein the tip-speed ratio is the ratio of the circumferential speed of the blades (13, F1-F6) with respect to the wind speed (v_{w}), and **in that** the virtual cam disk used for actively controlling the blades (13, F1-F6) is selected or changed between different virtual cam disks in accordance with the determined tip-speed ratio λ.

14. Method according to claim 12, **characterized in that** the virtual cam disks relate to a zero position of the wind turbine (10), and **in that** the zero position is dependent on the wind direction.

15. Method according to claim 11, **characterized in that** a separate wind speed (v_{w}) that is dependent on the height above the ground is determined for each of the cells (Z1, Z2), and **in that** the rotational position of the individual blades (13, F1-F6) of the cell about the rotational axis (12) thereof is actively controlled in accordance with the wind speed (v_{w}) determined for the cell.

## Revendications

1. Éolienne verticale (10), comprenant deux ou plusieurs cellules (Z1, Z2) disposées les unes au-dessus des autres le long d'un axe de machine (MA) vertical, chacune des cellules (Z1, Z2) comprenant une pluralité de pales verticales (13 ; F1-F6) qui sont réparties à l'intérieur de la cellule (Z1, Z2) sur un cercle concentrique autour de l'axe de machine (MA) et peuvent se déplacer ensemble sur ce cercle et sont reliées solidaires en rotation à un arbre principal (20), et les pales (13 ; F1-F6) dans la cellule (Z1, Z2) étant montées chacune de façon à pouvoir pivoter individuellement autour d'un axe de rotation (12) vertical qui traverse en particulier l'intérieur desdites pales, des moyens (39 ; 39a,b ; 49, 50 ; 52) étant associés à chacune des pales (13 ; F1-F6), lesquels moyens permettant, pendant la rotation autour de l'axe mécanique (MA), que la pale (13 ; F1-F6) puisse être amenée indépendamment des autres pales dans une position de rotation prédéterminée et modifiable à tout moment autour de son axe de rotation (12), les pales (13 ; F1-F6) en bas et en haut étant chacune montée en rotation à l'extrémité d'un bras radial, et les bras formant chacun un anneau fictif en haut et en bas de chaque cellule (Z1, Z2), **caractérisée en ce qu'un** dispositif de mesure du vent (W1-W3) est fixé à l'extrémité d'un bras par anneau.

2. Éolienne verticale selon la revendication 1, **caractérisée en ce que** chaque cellule (Z1, Z2) comprend des premier et second anneaux (11, 16, 19) disposés concentriquement à l'axe de machine (MA), lesquels anneaux délimitent la cellule (Z1, Z2) en haut et en bas, et entre lesquels les pales (13, F1-F6) de la cellule sont disposées en rotation à 360 °.

3. Éolienne verticale selon la revendication 2, **caractérisée en ce que** les pales (13, F1-F6) d'une cellule (Z1, Z2) sont montées en rotation, à leurs extrémités, à 360 ° sur les premier et second anneaux (11, 16, 19).

4. Éolienne verticale selon la revendication 2, **caractérisée en ce que** des cellules adjacentes (Z1, Z2) ont chacune un anneau (16) en commun.

5. Éolienne verticale selon la revendication 2, **caractérisée en ce que** les moyens (39 ; 39a,b ; 49, 50 ; 52) permettant de modifier la position de rotation des pales (13, F1-F6) sont disposés sur les anneaux (11, 16, 19).

6. Éolienne verticale selon la revendication 5, **caractérisée en ce que** les moyens (39 ; 39a,b ; 49, 50 ; 52) permettant de modifier la position de rotation des pales (13, F1-F6) comprennent un moteur à entraînement électrique ou hydraulique (39a,b).

7. Éolienne verticale selon la revendication 1, **caractérisée en ce que** la plus basse des cellules (Z1, Z2) se trouve à une distance prédéterminée du sol, et **en ce que** l'arbre principal (20) entre la cellule la plus basse (Z1) et la nacelle disposée au niveau du sol est monté en rotation à leurs extrémités.

8. Éolienne verticale selon la revendication 7, **caractérisée en ce que** le palier supérieur (23, 40) de l'arbre principal (20), lequel palier supérieur est conçu sous la forme d'un palier à rouleaux de support et absorbe les forces éoliennes de réaction verticales supérieures de l'arbre principal, est supporté, par un bâti de support (24, 25) qui s'élargit obliquement vers le bas, sur des fondations (29) disposées à l'extérieur de l'axe de machine (MA), les paliers axiaux et radiaux inférieurs de l'arbre principal (20) étant logés dans le carter de générateur, lequel étant fixé sur des montants supérieurs, à l'intérieur de la nacelle (26) suspendue dans le bâti de support (24, 25).

9. Éolienne verticale selon la revendication 1, **caractérisée en ce qu'un** dispositif de mesure du vent (W1-W3) permettant de mesurer la direction et la vitesse du vent est disposé en haut et en bas de chacune des cellules (Z1, Z2), lequel dispositif de mesure du vent comprend de préférence un anémomètre à ultrasons.

10. Éolienne verticale selon la revendication 1, **caractérisée en ce qu'un** dispositif de mesure de force (K1-K3) est prévu sur chacune des cellules (Z1, Z2) en haut et/ou en bas du palier de pale pour les directions radiale et tangentielle de la force.

11. Procédé pour faire fonctionner une éolienne verticale (10) selon la revendication 1, dans lequel la position de rotation des pales (13, F1-F6) individuelles de l'éolienne autour de leur axe de rotation (12) indépendamment les unes des autres en fonction des valeurs mesurées de la vitesse du vent (v_{w}), de la direction du vent, du régime de l'éolienne (10) et de la position des pales lors de leur rotation autour de l'axe de machine (MA) est commandée activement, les pales (13 ; F1-F6) étant montées en rotation chacune en bas et en haut à l'extrémité d'un bras radial, et les bras formant chacun un anneau fictif en haut et en bas de chaque cellule (Z1, Z2), **caractérisé en ce que,** à l'extrémité d'un bras par anneau, un écoulement de vent relatif dans la direction et la vitesse relatives au bras et donc à la pale (13 ; F1-F6) est déterminé.

12. Procédé selon la revendication 11, **caractérisé en ce que** des cames virtuelles sont prévues pour l'angle de pale qui décrit la déviation d'une pale (13, F1-F6) à partir d'une position de base tangentielle au cercle de rotation autour de l'axe de machine (MA), lesquelles cames virtuelles définissent chacune la courbe de l'angle de pale au-dessus de la position de la pale (13, F1-F6) sur le cercle de rotation, et **en ce que** la commande active des pales (13, F1-F6) individuelles s'effectue en fonction des cames virtuelles.

13. Procédé selon la revendication 12, **caractérisé en ce que,** pour la sélection des cames virtuelles utilisées pour la commande active des pales (13, F1-F6), la vitesse spécifique λ de l'éolienne (10) est déterminée en continu, la vitesse spécifique indiquant le rapport de la vitesse périphérique des pales (13, F1-F6) à la vitesse du vent (v_{w}), et **en ce que** la came virtuelle utilisée pour la commande active des pales (13, F1-F6) est sélectionnée ou changée entre différentes cames virtuelles en fonction de la vitesse spécifique λ déterminée.

14. Procédé selon la revendication 12, **caractérisé en ce que** les cames virtuelles sont relatives à une position zéro de l'éolienne (10), et **en ce que** la position zéro dépend de la direction du vent.

15. Procédé selon la revendication 11, **caractérisé en ce que,** pour chacune des cellules (Z1, Z2), une vitesse de vent (v_{w}) distincte est déterminée, laquelle dépend de la hauteur au-dessus du sol, et **en ce que** la position de rotation des pales (13, F1-F6) individuelles de la cellule est commandée activement autour de son axe de rotation (12) en fonction de la vitesse du vent (v_{w}) déterminée pour la cellule.
